# EUROPEAN PATENT APPLICATION

(11) **EP 4 703 982 A1**
(43) Date of publication of application: **04.03.2026**
(21) Application number: 24796668.2
(22) Date of filing: 25.03.2024
(51) Int. Cl.: G06N 20/00, G06F 16/908, G06N 3/0475

(54) **LEARNING MODEL GENERATION METHOD, PRESENTATION METHOD, EVALUATION METHOD, AND GENERATION METHOD**

(30) Priority: 28.04.2023 JP 2023073976
(71) Applicant: Sony Group Corporation, Tokyo 108-0075 (JP)
(72) Inventor: TAKATSUKA Susumu, Tokyo 108-0075 (JP); SHIMIZU Itaru, Tokyo 108-0075 (JP); TETSUKAWA Hiroki, Tokyo 108-0075 (JP)
(74) Representative: D Young & Co LLP
(86) International application number: PCT/JP2024/011697
(87) International publication number: WO 2024/224910

(57) **Abstract**

The present disclosure relates to a learning model generation method, a presentation method, an evaluation method, and a generation method which are capable of providing more creative content.

A plurality of components constituting each of a plurality of different pieces of content is acquired, and a learning model that outputs an index value indicating relevance of a first component with respect to a second component among the plurality of components is generated. The technique according to the present disclosure can be applied to a system related to creation support for a creator, for example.

## Description

### TECHNICAL FIELD

The present disclosure relates to a learning model generation method, a presentation method, an evaluation method, and a generation method, and particularly relates to a learning model generation method, a presentation method, an evaluation method, and a generation method which are capable of providing more creative content.

### BACKGROUND ART

In the related art, there has been known a technique of expressing a text-based word or sentence by a multidimensional vector or automatically generating a natural language on the basis of a word or sentence expressed by a multidimensional vector.

For example, Patent Document 1 discloses a method of determining a similarity distance between a source document and a target document using a language model, and outputting information related to the target document on the basis of the similarity distance. Furthermore, Patent Document 2 discloses a data generation method of generating new data and label information for the new data by inputting a prompt as an input sentence to a language model and generating a natural word.

### CITATION LIST

### PATENT DOCUMENT

Patent Document 1: Japanese Patent Application Laid-Open No. 2023-26279
Patent Document 2: Japanese Patent Application Laid-Open No. 2023-18624

### SUMMARY OF THE INVENTION

### PROBLEMS TO BE SOLVED BY THE INVENTION

However, the techniques of Patent Document 1 and Patent Document 2 can be applied only to texts, and can only automatically generate sentences. In order to realize provision of more creative content, it is required to express components constituting various kinds of content that can be created by humans as multidimensional vectors.

The present disclosure has been made in view of such a situation, and an object thereof is to provide more creative content.

### SOLUTIONS TO PROBLEMS

A learning model generation method according to a first aspect of the present disclosure is a learning model generation method including acquiring a plurality of components constituting each of a plurality of different pieces of content; and generating a learning model that outputs an index value indicating relevance of a first component with respect to a second component among the plurality of components.

A presentation method according to a second aspect of the present disclosure is a presentation method performed by a presentation device including a learning model that has learned an index value indicating relevance of, among a plurality of components constituting each of a plurality of different pieces of content, a first component with respect to a second component, and the presentation method includes inputting target content as an evaluation target; and presenting relevance information based on relevance between the components on the basis of the index value of each of the plurality of components constituting the target content.

An evaluation method according to a third aspect of the present disclosure is an evaluation method performed by an evaluation device including a learning model that has learned an index value indicating relevance of, among a plurality of components constituting each of a plurality of different pieces of content, a first component with respect to a second component, and the evaluation method includes inputting target content as an evaluation target or a combination of the plurality of components; and evaluating relevance information based on relevance between the components on the basis of the index value of each of the plurality of components constituting the target content or the combination.

A generation method according to a fourth aspect of the present disclosure is a generation method performed by a generation device including a learning model that has learned an index value indicating relevance of, among a plurality of components constituting each of a plurality of different pieces of content, a first component with respect to a second component, and the generation method includes inputting the plurality of components for generating new content or a part of the new content; and generating the new content or the part of the new content on the basis of the index value of each of the plurality of input components.

In the first aspect of the present disclosure, a plurality of components constituting each of a plurality of different pieces of content is acquired, and a learning model which outputs an index value indicating the relevance of a first component to a second component among the plurality of components.

In the second aspect of the present disclosure, in the presentation device including a learning model that has learned an index value indicating relevance of, among a plurality of components constituting each of a plurality of different pieces of content, a first component with respect to a second component, target content as an evaluation target is input, and relevance information based on relevance between the components is presented on the basis of the index value of each of the plurality of components constituting the target content.

In the third aspect of the present disclosure, in the evaluation device including a learning model that has learned an index value indicating relevance of, among a plurality of components constituting each of a plurality of different pieces of content, a first component with respect to a second component, target content as an evaluation target or a combination of the plurality of components is input, and relevance information based on relevance between the components is evaluated on the basis of the index value of each of the plurality of components constituting the target content or the combination.

In the fourth aspect of the present disclosure, in the generation device including a learning model that has learned an index value indicating relevance of, among a plurality of components constituting each of a plurality of different pieces of content, a first component with respect to a second component, the plurality of components for generating new content or a part of the new content is input; and the new content or the part of the new content is generated on the basis of the index value of each of the plurality of input components.

### BRIEF DESCRIPTION OF DRAWINGS

Fig. 1 is a diagram illustrating an outline of a technique according to the present disclosure.
Fig. 2 is a diagram illustrating an example of content and components.
Fig. 3 is a diagram illustrating an example of content and components.
Fig. 4 is a diagram illustrating an example of an inclusion relationship of content.
Fig. 5 is a diagram illustrating an example of content and components.
Fig. 6 is a diagram illustrating an example of content and components.
Fig. 7 is a diagram illustrating a configuration for realizing generation of an inter-concept distance network.
Fig. 8 is a flowchart illustrating weighting of properties for each component.
Fig. 9 is a diagram illustrating learning of an inter-concept distance network.
Fig. 10 is a diagram illustrating a first example of weighting applied to components.
Fig. 11 is a diagram illustrating a second example of weighting applied to components.
Fig. 12 is a diagram illustrating a third example of weighting applied to components.
Fig. 13 is a diagram illustrating an example of a learning model for performing unsupervised learning.
Fig. 14 is a block diagram illustrating a functional configuration example of a presentation device.
Fig. 15 is a flowchart illustrating an operation of a presentation device.
Fig. 16 is a block diagram illustrating a functional configuration example of an evaluation device.
Fig. 17 is a flowchart illustrating an operation of an evaluation device.
Fig. 18 is a block diagram illustrating a functional configuration example of a generation device.
Fig. 19 is a flowchart illustrating an operation of a generation device.
Fig. 20 is a diagram illustrating a use case of the technique according to the present disclosure.
Fig. 21 is a diagram illustrating a use case of the technique according to the present disclosure.
Fig. 22 is a diagram illustrating a use case of the technique according to the present disclosure.
Fig. 23 is a block diagram illustrating a configuration example of hardware of a computer.

### MODE FOR CARRYING OUT THE INVENTION

Hereinafter, modes for carrying out the present disclosure (hereinafter referred to as embodiments) will be described. Note that the description will be made in the following order.

1. Problems of Technique in Related Art and Outline of Technique According to Present Disclosure
2. Examples of Content and Components
3. Generation of Inter-Concept Distance Network
4. Configuration and Operation of Presentation Device
5. Configuration and Operation of Evaluation Device
6. Configuration and Operation of Generation Device
7. Use Case
8. Configuration Example of Hardware of Computer

### <1. Problems of Technique in Related Art and Outline of Technique According to Present Disclosure>

In the related art, there has been known a technique of expressing a text-based word or sentence by a multidimensional vector or automatically generating a natural language on the basis of a word or sentence expressed by a multidimensional vector.

However, these techniques can be applied only to texts, and can only automatically generate sentences. In order to realize provision of more creative content, it is required to express components constituting various kinds of content that can be created by humans as multidimensional vectors.

In contrast, in the technique according to the present disclosure, the provision of higher-dimensional content not limited to only text is realized.

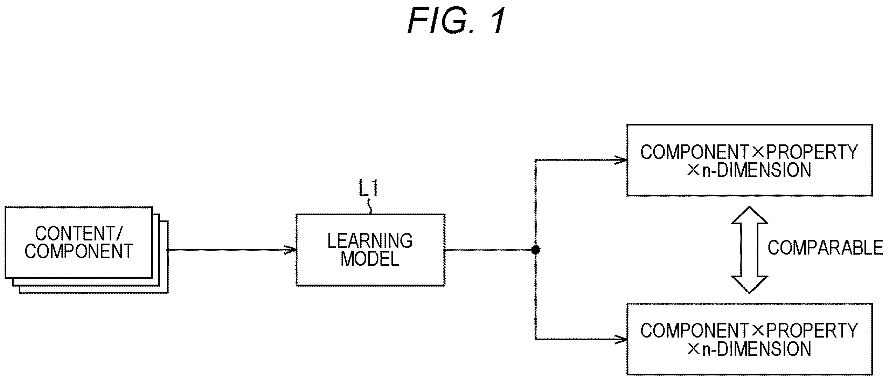

Specifically, as illustrated in Fig. 1, the provision of the higher-dimensional content is realized by using a learning model L1 in which a plurality of different pieces of content or a plurality of components constituting each piece of content is used as an input and an index value indicating the relevance between the components based on n-dimensional property weighting for each component is used as an output. The index value for each component as an output is made comparable as a distance vector representing a position in space.

In this way, it is possible to generate more creative content by expressing the components constituting content as multidimensional vectors, measuring inter-concept distances between the components, and generating combinations that ensure appropriate inter-concept distances. Furthermore, by measuring the inter-concept distances between the components constituting the content, it is possible to evaluate the creativity of the content and to provide appropriate advice.

### <2. Examples of Content and Components>

The plurality of components constituting each of the plurality of different pieces of content includes two or more pieces of content configuration information of different dimensions constituting the content as described later. The dimension of the content configuration information can also be referred to as a type of content configuration information to be described later.

The content configuration information may be two or more pieces of information constituting any of temporal change-related information, person-related information, style information, body motion pattern information, or target-related information, and may include at least one of these pieces of information.

The plurality of components may further include two or more pieces of content configuration information of the same dimension. In this case, two or more pieces of content configuration information of the same dimension may include a word or a sentence.

Hereinafter, specific examples of content that can be handled in the technique according to the present disclosure and components that can be extracted from the content by learning will be described.

### (Specific Example 1: Character)

A "character" is a person appearing in a story or a model with personality expressed in a two-dimensional or three-dimensional manner. The "character" may include, in addition to a human, an animal, a robot, and an anthropomorphized tangible or intangible event.

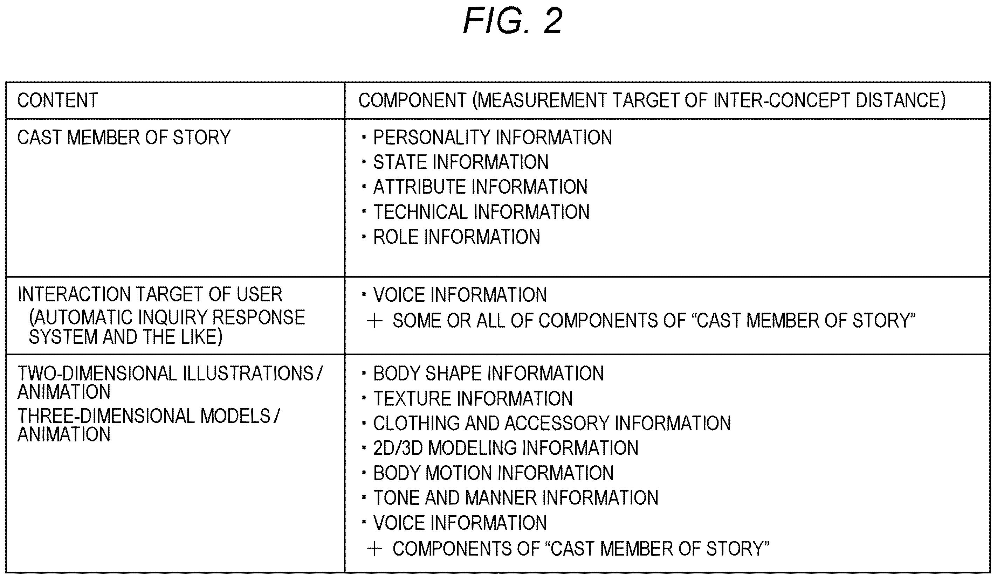

Fig. 2 is a diagram illustrating an example of characters and components thereof.

In the technique according to the present disclosure, the component is a measurement target of an inter-concept distance for evaluating content. In the related art, there has been a case where a combination of attributes is simply generated as the component of content, but in the technique according to the present disclosure, an inter-concept distance is applied to these components.

Fig. 2 illustrates an example of characters as content that can be handled in the technique according to the present disclosure and components that can be extracted from the character by learning.

The components illustrated in Fig. 2 are extracted by decomposing a completed and finalized creative artifact (character) by a system (automatic annotation is performed). Furthermore, the components illustrated in Fig. 2 are also extracted by being associated with the finalized creative artifact and learned, on the basis of setting information or modeling information at a production stage of the character.

In Fig. 2, examples of characters as one type of content include a "cast member in a story", an "interaction target for a user", and "two-dimensional illustrations/animation or three-dimensional models/animation".

In a case where the content is a "cast member in a story", examples of the components include "personality information", "state information", "attribute information", "technical information", and "role information".

For example, "personality information" includes a personality type, flaws, and behavioral tendencies of the cast member of the story. The "state information" includes the age, gender, and the like of the cast member of the story. The "attribute information" includes the hometown, affiliated organization, and the like of the cast member of the story. The "technical information" includes an occupation, special abilities, and the like of the cast member of the story. The "role information" includes the motivation and purpose of behavior of the cast member of the story, within the story.

In a case where the content is an "interaction target for a user", examples of the components include "voice information". The "interaction target for a user" here is an automatic inquiry response system capable of interacting with the user.

For example, the "voice information" includes a voiceprint of the voice to be a response to the user, an utterance habit, and tone and manner (a rule for maintaining consistency) regarding the utterance. Furthermore, as components of the "interaction target for a user", some or all of the components of the "cast member in a story" described above may also be included.

In a case where the content is "two-dimensional illustrations/animation or three-dimensional models/animation", examples of the components include "body shape information", "texture information", "clothing and accessory information", "2D/3D modeling information", "body motion information", "tone and manner information", and "voice information".

For example, the "body shape information" includes information for determining the rendering and motion of a base body, including skeleton information of a character expressed by two-dimensional or three-dimensional animation. The "body motion information" particularly includes a motion pattern, a motion habit, and the like unique to the character.

In the related art, there are techniques of generating characters randomly by combining visual parts, but in the technique according to the present disclosure, a character is handled by being decomposed into a plurality of pieces of information having different abstraction levels constituting the character.

### (Specific Example 2: Story)

The "story" refers to a series of expressions in which behaviors or events of a person progress with time. The "story" may include from a "script" which includes the configuration and production instructions, to a "novel", "animation work", or "video work" as a final expressive work.

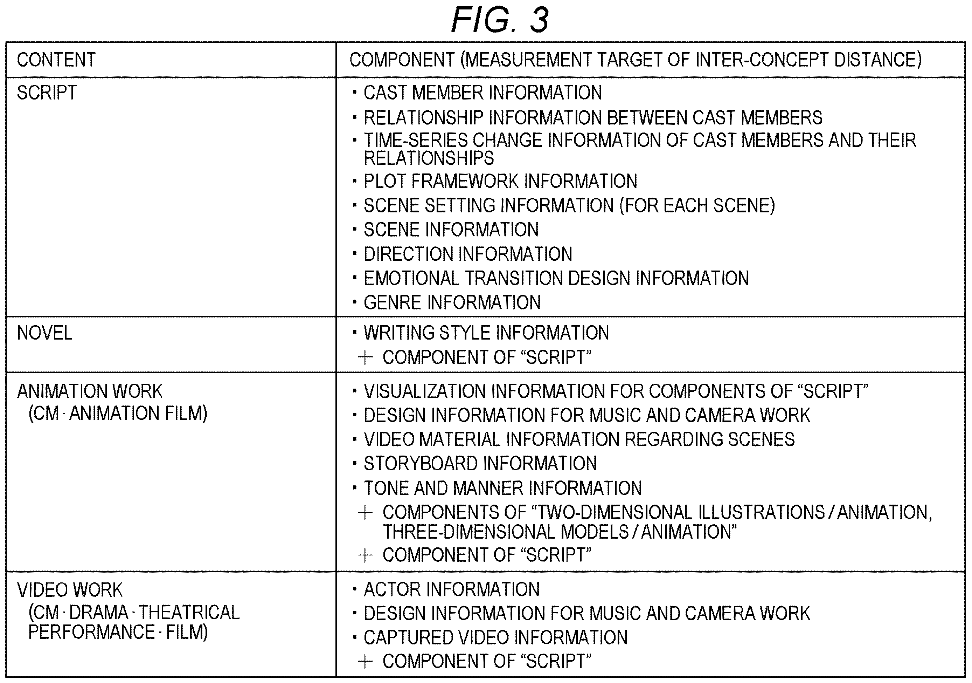

Fig. 3 is a diagram illustrating an example of a story and components thereof.

Fig. 3 illustrates an example of a story as content that can be handled in the technique according to the present disclosure and components that can be extracted from the story by learning.

The components illustrated in Fig. 3 are extracted by decomposing a completed and finalized creative artifact (story) by a system (automatic annotation is performed). Furthermore, the components illustrated in Fig. 3 are also extracted by being associated with the finalized creative artifact and learned, on the basis of setting information or modeling information at a production stage of the story.

In Fig. 3, examples of the story, which is one type of content, include a "script", "novel", "animation work", and "video work". The "animation work" may include a commercial message (CM), an animation film, and the like. Furthermore, the "video work" may include a CM, a drama, theatrical performance, a film, and the like.

In a case where the content is a "script", examples of the components include "cast member information", "relationship information between cast members", "time-series change information of cast members and their relationships", "plot framework information", "scene setting information (for each scene)", "scene information", "direction information", "emotional transition design information", and "genre information".

For example, the "cast member information" represents a cast member of the story. The "plot framework information" includes elements of act structure, time-series information of events, and the like. The "scene setting information (for each scene)" includes a location, a geographical condition, a spatial setting, weather, time, and the like. The "scene information" includes time-series information such as scenes, actions of the person, interaction, and depictions. The "direction information" includes the design of an emotional change, instruction information for the person, instruction information for music and video expression, and the like. The "emotional transition design information" includes information associated with information regarding transitions in emotional states of cast members or recipients. The "genre information" includes information associated with information regarding the typological structure of the story and the like.

As described above, in the technique according to the present disclosure, as the components of the "script", time-series change information is handled, and abstract skeleton information and direction information such as plot framework information and emotional transition design information is handled rather than the final sentence expression.

In a case where the content is a "novel", examples of the components include "writing style information".

For example, the "writing style information" includes information associated with information regarding a style of sentences unique to an author. Furthermore, some or all of the components of the "script" described above may be further included as the components of the "novel".

In a case where the content is an "animation work", examples of the components include "visualization information for the components of the script", "design information for music and camera work", "video material information regarding scenes", "storyboard information", and "tone and manner information".

For example, the "video material information regarding scenes" includes 3D model information of locations, and the like. The "tone and manner information" includes information associated with information regarding the style of the animation work. Furthermore, as the components of the "animation work", some or all of the components of the "two-dimensional illustrations/animation or three-dimensional models/animation" illustrated in Fig. 2, and some or all of the components of the "script" described above may also be included.

In a case where the content is a "video work", examples of the components include "actor information", "design information for music and camera work", and "captured video information".

Furthermore, some or all of the components of the "script" described above may be further included as the components of the "video work".

Note that each piece of content created as a story may have a multilayered inclusion relationship.

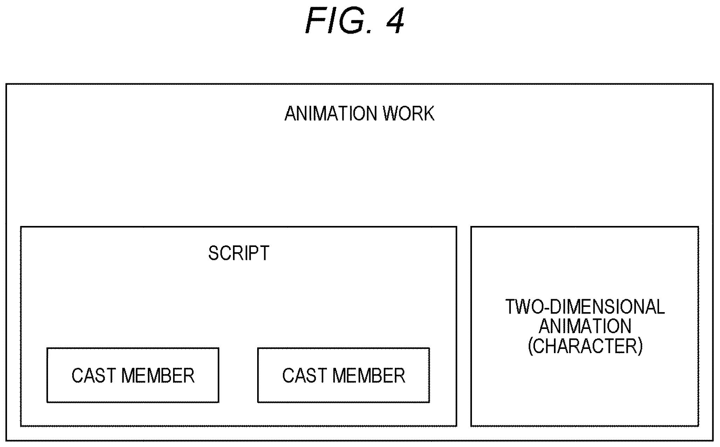

For example, as illustrated in Fig. 4, an "animation work" as one of the stories may include a "script" as one of the stories and "two-dimensional animations" as one of the characters (Fig. 2). Furthermore, a "script" as one of the stories may include a plurality of "cast members" as one of the characters (Fig. 2).

### (Specific Example 3: Creation regarding Physicality)

The "creation regarding physicality" refers to expression and creation based on human physicality, such as dance and theatrical performance.

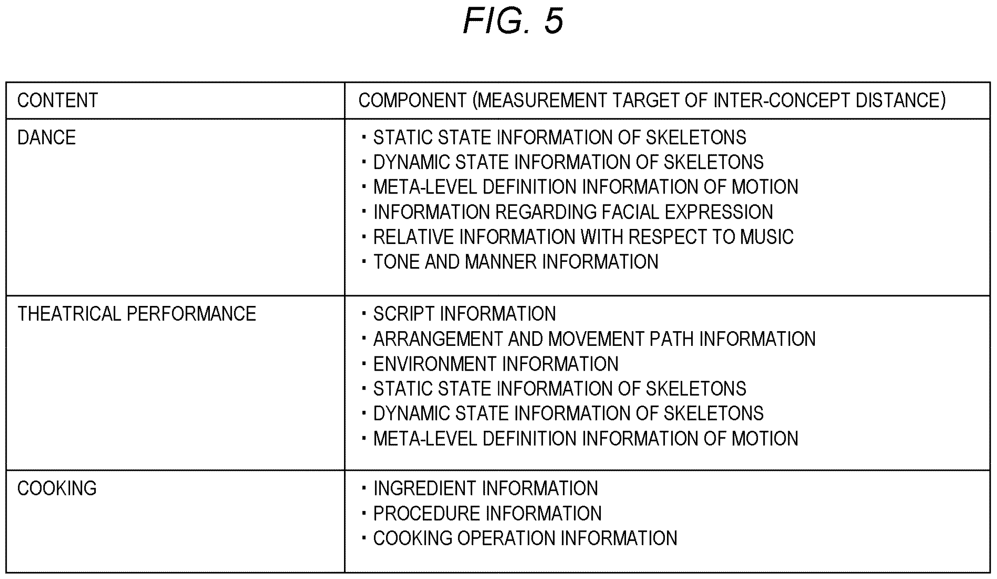

Fig. 5 is a diagram illustrating an example of creation regarding the physicality and components thereof.

Fig. 5 illustrates an example of creation regarding the physicality as content that can be handled in the technique according to the present disclosure and components that can be extracted from the creation regarding the physicality by learning.

The components illustrated in Fig. 5 are extracted using a sensing technique such as motion capture on the basis of actual expressions by a creator or a performer. Furthermore, the components illustrated in Fig. 5 are extracted by being associated with the final expressions and learned, on the basis of an input of information that describes the components, such as choreography instruction information and expression configuration information.

In Fig. 5, examples of creation regarding the physicality, which is one type of content, include "dance", "theatrical performance", and "cooking".

In a case where the content is "dance", examples of the components include "static state information of skeletons", "dynamic state information of skeletons", "meta-level definition information of motion", "information associated with information regarding facial expression", "relative information with respect to music", and "tone and manner information".

For example, the "static state information of skeletons" includes static skeletal position information for each scene of the choreography, and the like. The "dynamic state information of skeletons" includes dynamic skeletal motion information between scenes of the choreography, and the like. The "meta-level definition information of motion" includes information independent of expression, such as a motion transition instruction based on a choreography name. The "information associated with information regarding facial expression" includes information associated with information regarding expressions expressed through the face or physicality. The "relative information with respect to music" includes expression information of the relevance between each piece of information and the music. The "tone and manner information" includes information associated with information regarding the style of the dance and information associated with information regarding the individuality unique to a creator or a work.

In a case where the content is "theatrical performance", examples of components include "script information", "arrangement and movement path information", "environment information", "static state information of skeletons", "dynamic state information of skeletons", and "meta-level definition information of motion".

For example, "arrangement and movement path information" includes information associated with information regarding the arrangement of persons and stage equipment on a stage, and the movement paths during transitions. The "environment information" includes information that specifies the relationship between the actors and the environment, such as the arrangement of stage equipment and props, and stage direction. The "static state information of skeletons", the "dynamic state information of skeletons", and the "meta-level definition information of motion" include information that specifies the choreography of actors, similar to the case where the content is "dance".

In a case where the content is "cooking", examples of the components include "ingredient information", "procedure information", and "cooking operation information".

For example, the "ingredient information" includes information associated with information regarding combinations of food ingredients and seasonings. The "procedure information" includes information associated with information regarding cooking procedures (so-called recipe). The "cooking operation information" includes information specifying operations such as cutting, grilling, and boiling.

As described above, in the technique according to the present disclosure, components of expression and creation in the real world are also handled by sensing in the real world.

### (Specific Example 4: Information Associated with Information regarding Recipient)

Many of the creative artifacts are not merely for the purpose of only creating the creative artifacts themselves, but are created with a recipient (hereinafter, also referred to as a target) who is a specific subject in order to achieve the following purposes for the target. Specifically, the creative artifact is created to be presented to the recipient and to satisfy the recipient. Furthermore, the creative artifact is created to present a certain message to the recipient, using the creative artifact itself as a medium for delivering the message.

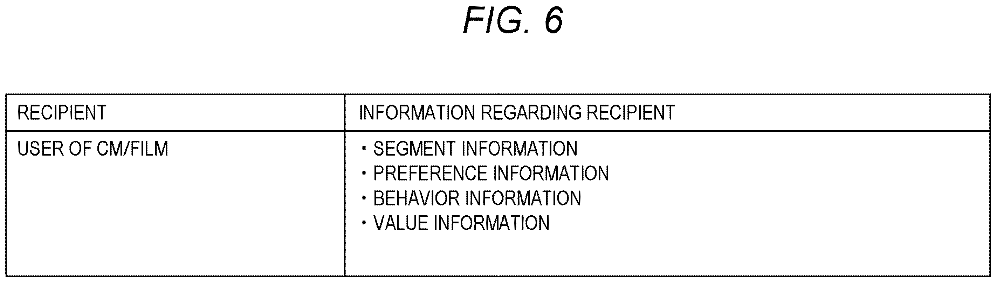

Fig. 6 is a diagram illustrating an example of a recipient and information associated with information regarding the recipient.

In evaluating content based on the inter-concept distance, by including information associated with information regarding the recipient as a measurement target of the inter-concept distance, it is possible to evaluate whether or not the content or its components are appropriate for the intended recipient to whom the content is expected to be presented, and ultimately, whether or not the content can fulfill its intended purpose for the recipient.

Fig. 6 illustrates an example of a recipient of content that can be handled in the technique according to the present disclosure and information associated with information regarding the recipient.

The information associated with information regarding the recipient illustrated in Fig. 6 is associated with arbitrary content by acquiring information on the degree to which the content has been received for each segment of the recipient in relation to existing content. Furthermore, the information associated with information regarding the recipient illustrated in Fig. 6 is also associated at the production stage of the content by being inferred from planning documents and the like, and is used to evaluate the degree to which the content has achieved its intended purpose for the recipient.

Fig. 6 illustrates "user of CM/film" as an example of the recipient.

In a case where the receiver is a "user of CM/film", examples of the information associated with information regarding the recipient include "segment information", "preference information", "behavior information", and "value information".

For example, the "segment information" includes the birth year, age, gender, region, occupation, income, family structure, and the like of the user. The "preference information" includes information associated with information regarding the user's favorite actor, music, video work, and other content. The "behavioral information" includes the hobbies, behavioral tendencies on holidays, and purchasing tendencies of the user. The "value information" includes information that serves as a determination factor in the user's behavior or content selection.

As described above, in the technique according to the present disclosure, the information associated with information regarding the recipient can also be one of the components of the content presented to the recipient. Furthermore, the information associated with information regarding the recipient can be an index for evaluating the appropriateness of the inter-concept distance.

### <3. Generation of Inter-Concept Distance Network>

In the technique according to the present disclosure, a plurality of components constituting each of a plurality of different pieces of content is acquired, and a learning model which outputs an index value indicating the relevance of a first component to a second component among the plurality of acquired components.

### (Overview of Learning Model)

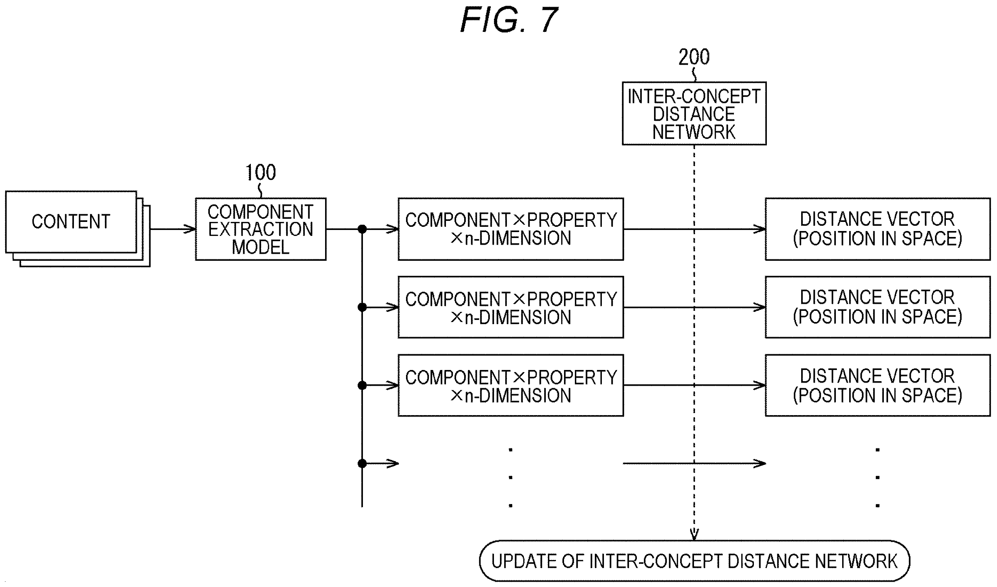

Fig. 7 is a diagram illustrating a configuration for realizing generation of a learning model (inter-concept distance network).

As illustrated in Fig. 7, the generation of the learning model is realized through a first step executed by a component extraction model 100 and a second step executed by an inter-concept distance network 200.

In the first step, the component extraction model 100 decomposes the content or the component thereof into components with n-dimensional property weighting on the basis of feature amounts thereof.

In the second step, the inter-concept distance network 200 determines the weighting of distance vectors that define the positions of the respective components, which are decomposed by the component extraction model 100, in a distance space. Therefore, the update (learning) of the inter-concept distance network 200 is performed. The distance vectors of the respective components are added on the basis of analysis results of a plurality of pieces of content.

The inter-concept distance network 200 is a learning model in the technique according to the present disclosure, and outputs a distance vector for each component as an index value indicating the relevance between components.

The distance vector (index value) for each component is a value based on weighting according to a case where a plurality of components constitutes one piece of content. The distance vector (index value) may be further weighted according to evaluation information for the content. Here, the evaluation information for the content may be information representing the recipient's evaluation including viewing of the content and the like, and may be information input in association with the content. Furthermore, the evaluation information for the content may be input after the learning model (inter-concept distance network 200) is generated, and the learning model may update the distance vector (index value) on the basis of the input.

Note that the distance between the components is calculated without distinction not only between the same type of components (for example, a plot and a plot) but also between different types of components (for example, a plot and a character).

### (Weighting of Properties of Components)

The weighting of the property of each component of the content is performed by the component extraction model 100. At this time, in the extraction of the component and the weighting of the property, the feature amount may be analyzed on the basis of the existing trained model (component extraction model 100), and the annotation may be automatically added.

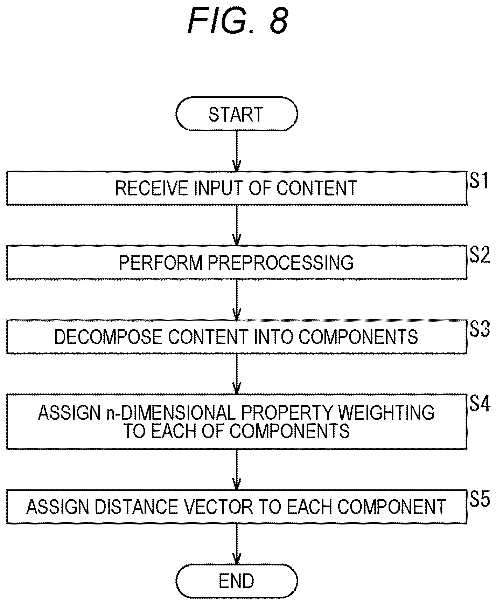

Here, weighting of properties of each component will be described with reference to the flowchart of Fig. 8.

In step S1, the component extraction model 100 receives an input of content. For example, the component extraction model 100 receives an input of a video work such as a completed film as it is as video information/voice information.

In step S2, the component extraction model 100 performs preprocessing on the input content. As the preprocessing, processing of extracting unit information, which is a spatially and temporally meaningful block is performed on the input content by recognition techniques such as object recognition and scene recognition. For example, as unit information, a person is extracted, a line of dialogue is extracted, or a scene is extracted.

In step S3, the component extraction model 100 decomposes the preprocessed content into components on the basis of feature amounts of elements constituting the content. The feature amount is recognized and calculated on the basis of an appropriate existing learning model (component extraction model 100). For example, as the components, an actor or a character is acquired from a person, scene information or plot information is acquired from an event, and emotional transition information is acquired from a tone change.

In step S4, the component extraction model 100 assigns n-dimensional weighting, which indicates properties of each component, to each of the acquired components. For example, weighting such as (Type-A plot, Type-B plot, Type-C plot,...)=(0.2, 0.3, 0.8,...) is assigned to the plot 1. Furthermore, weightings such as (hostility, action, presentation of mystery, friendship,...)=(0.9, 0.8, 0.2, 0.5,...) are assigned to the scene 2.

In step S5, the component extraction model 100 assigns a distance vector to each component as weighting that indicates its position in space. That is, for the components of which the properties are expressed by n-dimensional weighting, relative distances to other components are provided. For example, as the distance vector, weighting for determining the position as having a certain closeness may be assigned on the basis of the fact that the respective components are included in the same content. The types of weighting will be described later.

In the above description, it has been assumed that, in the extraction of the component and the weighting of the property, the feature amount is analyzed on the basis of the existing trained model and the annotation is automatically added.

In addition to this, the extraction of the components and the weighting of the property may also be performed, at the time of the input of the content, on the basis of each component constituting the content and annotation information associated therewith. In this case, the component extraction model 100 may be subjected to relearning based on the annotation information.

### (Learning of Inter-Concept Distance Network)

As described above, the inter-concept distance network 200 is trained using the components which are obtained by decomposing certain content and to which the weighting of the property is assigned.

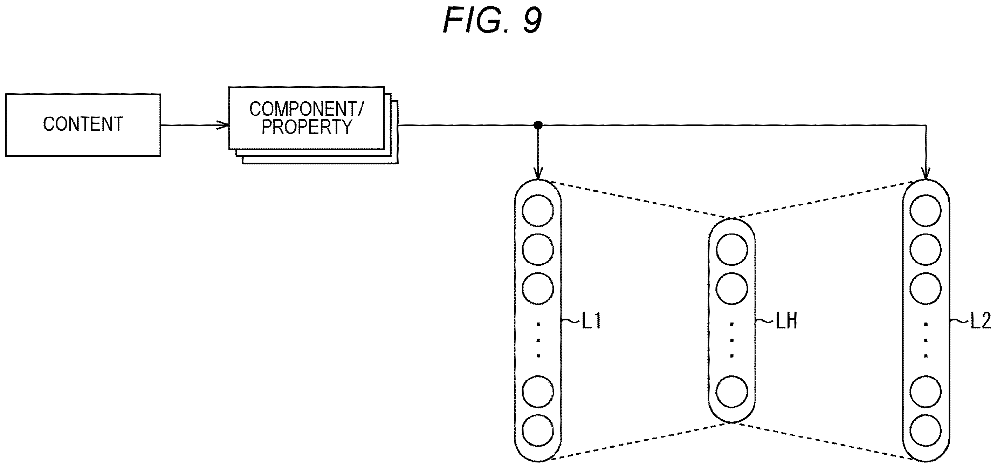

With reference to Fig. 9, the training of the inter-concept distance network 200 will be described.

As illustrated in Fig. 9, the input to an input layer L1 is a component constituting certain content or a property of the component. Similarly, the input to an output layer L2 is another component constituting certain content or a property of the component. Then, the inputs to the input layer L1 and the output layer L2 are performed for a plurality of pieces of content (specifically, components constituting the content).

Through the training described above, a probability that the property of a certain component is combined with the property of another component in content production is learned. A hidden layer LH in this training corresponds to the inter-concept distance network 200, which determines the distance vector for each property of the components.

As a result of such training, by inputting the property of an arbitrary component into the trained inter-concept distance network 200, it is possible to obtain an output of the property of the component located at an arbitrary distance from the input.

Note that, regarding the weighting of the distance, in certain content, additional emphasis may be placed on the weighting such that the components located at temporally proximate positions such as components included in a specific scene are combined with a higher probability, for example.

### (Type of Weighting)

As a method of assigning the weighting of the distance vector to the component, an appropriate method may be selected from the types described below.

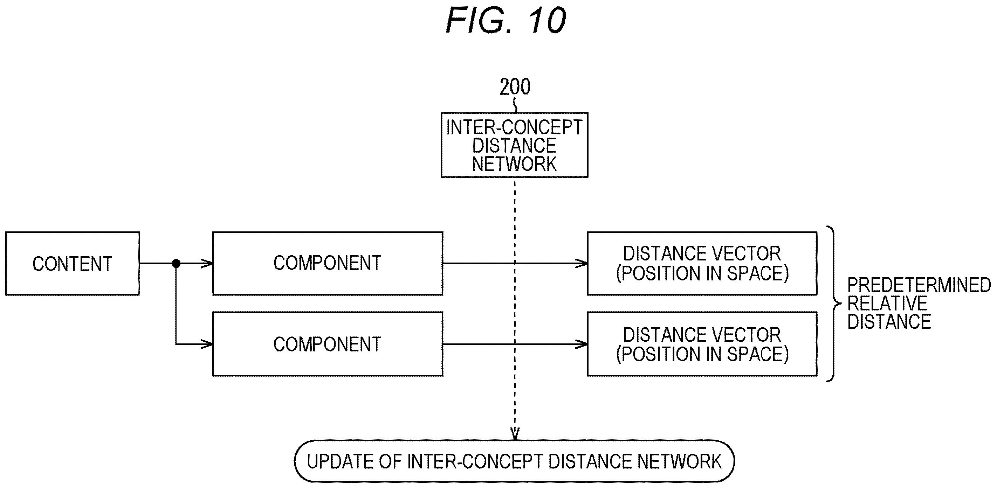

Fig. 10 is a diagram illustrating a first example of weighting applied to the components.

As illustrated in Fig. 10, for the components constituting the same content, weighting is performed such that these components are at a predetermined relative distance (or within a relative distance of a predetermined width).

As a result, a combination of frequently appearing components can be evaluated as a basic combination, such as a love story between a man and a woman, for example. Furthermore, a combination of frequently appearing components can be evaluated as an ordinary combination.

On the other hand, a combination with a relative distance greater than a predetermined distance may be evaluated as an unconventional and novel combination, such as a story in which a Chinese military commander from history plays an active role in modern-day Tokyo, or a comedy themed around bathhouses of ancient Rome and modern Japanese baths. Furthermore, a combination with a relative distance greater than the predetermined distance may also be evaluated as a combination that is far to such an extent that it is difficult to combine.

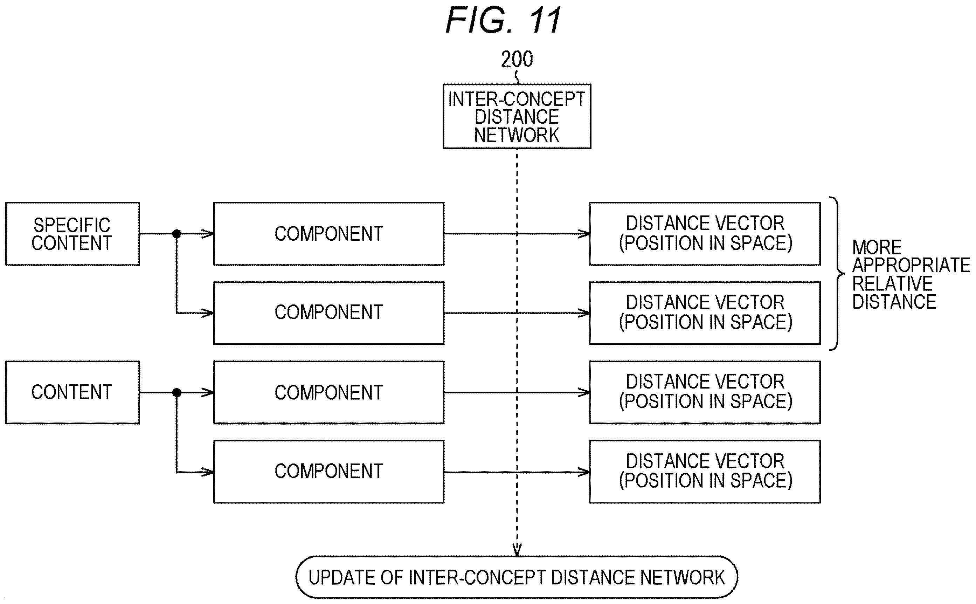

Fig. 11 is a diagram illustrating a second example of weighting applied to the components.

As illustrated in Fig. 11, for the components constituting specific content among several pieces of content, weighting is performed such that these components are at a more appropriate relative distance.

For example, in a case where the content is a commercial work, it is estimated that the content ensures a certain level of quality, and thus the relative distance between the components constituting the content is considered to be appropriate. In this case, market response information such as sales information or viewership rating information may also be additionally assigned to the weighting.

Furthermore, for example, in a case where the inter-concept distance network 200 is optimized for a specific user, it is possible to evaluate the inter-concept distance according to the user's intention by evaluating that the relative distance between the components constituting the content designated by the user is appropriate.

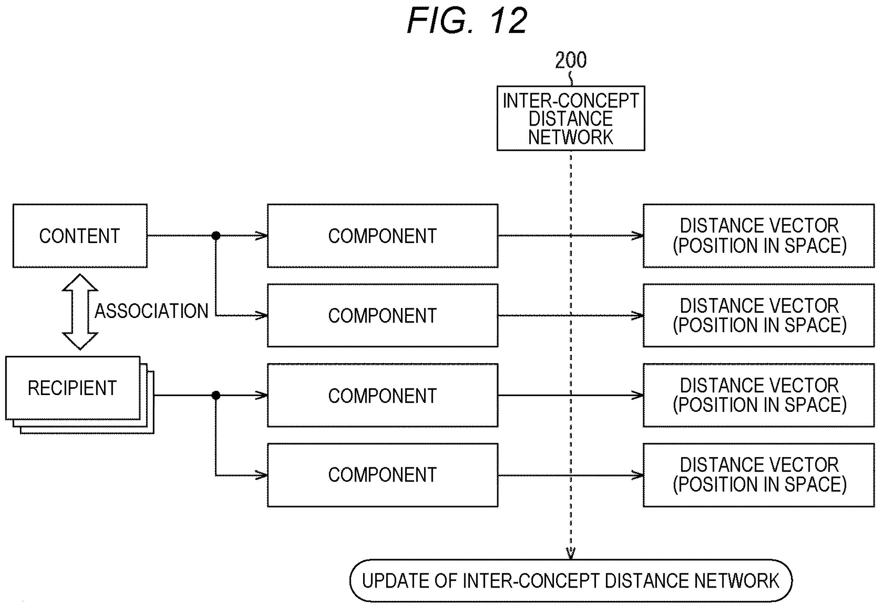

Fig. 12 is a diagram illustrating a third example of weighting applied to the components.

As illustrated in Fig. 12, there is a case where information associated with information regarding a recipient (target) is associated with certain content. The information associated with information regarding the recipient can include, for example, target user information at the planning stage, customer-specific sales information after content release, viewership rating information, and the like.

In this case, weighting based on the information associated with information regarding the recipient may be added to the components of the content and their combinations. Here, the information associated with information regarding the recipient may be a single piece of information or a plurality of pieces of information. Therefore, it is possible to evaluate, for example, that a combination of certain components (for example, a romance-type plot and a school scene) is appropriate for the information associated with information regarding recipients in their 20s, but not effective for the information associated with information regarding recipients in their 70s.

### (Unsupervised Learning)

The training of the inter-concept distance network 200 may be realized through unsupervised learning (reinforcement learning).

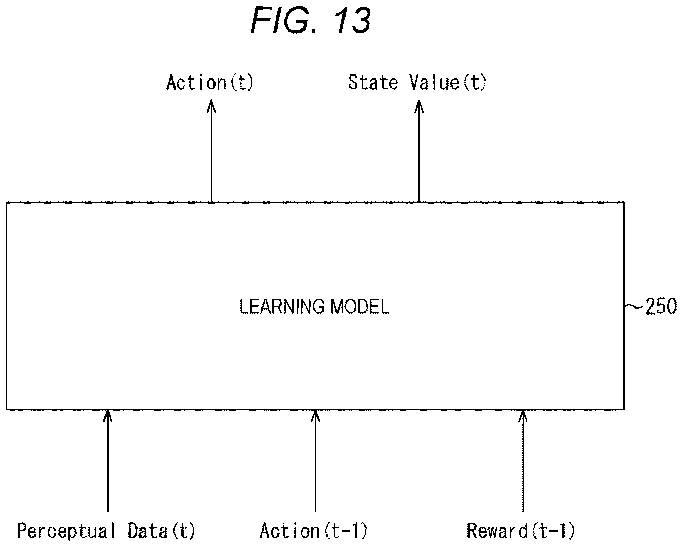

Fig. 13 is a diagram illustrating an example of a learning model for performing unsupervised learning.

A learning model 250 illustrated in Fig. 13 performs unsupervised learning using receives Perceptual Data(t), Action(t-1), and Reward(t-1) as inputs, and using Action(t) and State Value(t) as outputs.

Action is arbitrary content (combination of components having arbitrary properties) generated by the learning model 250.

Reward is a reward value, and represents an evaluation of the content generated by the learning model 250. Examples of Reward may include reactions from content-viewing users or evaluations provided by users who operate the learning model 250.

Perceptual Data is environment information, and may include a precondition of the content, a user segment layer, and the like.

The precondition of the content includes the genre, basic information, and the like of the content. In a case where the precondition of the content is given as Perceptual Data, the learning model 250 explores combinations of some component within the precondition. In this case, Perceptual Data remains unchanged in principle.

In a case where the user segment layer is given as Perceptual Data, it is conceivable that the user segment layer is changed according to the output content. In this case, the change in the user segment layer can also be reflected in the learning model 250.

State Value is a value for evaluating each state in unsupervised learning. As the value of State Value is larger, an expected combination of the components is output.

With such a configuration, the training of the inter-concept distance network 200 can be realized.

Note that in the above-described unsupervised learning, a method using a General Adversarial Network (GAN) may also be applied. Furthermore, by using a learning model generated through supervised learning as a starting point, unsupervised learning may be performed on the learning model.

According to the above-described inter-concept distance network, for content produced by the user, it is possible to measure the inter-concept distance between the components constituting the content, and as a result, it is possible to provide more creative content.

### <4. Configuration and Operation of Presentation Device>

A configuration and an operation of a presentation device that realizes presentation of the inter-concept distance based on the inter-concept distance network 200 will be described.

### (Configuration of Presentation Device)

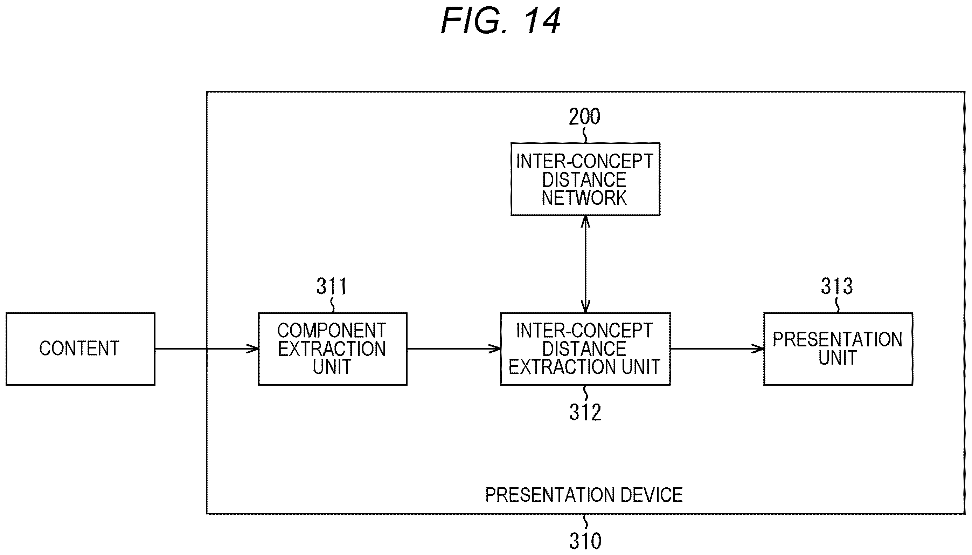

Fig. 14 is a block diagram illustrating a functional configuration example of the presentation device.

A presentation device 310 illustrated in Fig. 14 estimates an inter-concept distance between components constituting target content, which is an evaluation target, on the basis of the inter-concept distance network 200, and presents the inter-concept distance to the user.

The presentation device 310 includes a component extraction unit 311, an inter-concept distance extraction unit 312, and a presentation unit 313.

The component extraction unit 311 receives an input of the target content, and decomposes the target content into components to extract the components constituting the target content.

On the basis of the index value (distance vector) for each component learned through the inter-concept distance network 200, the inter-concept distance extraction unit 312 extracts (estimates) the inter-concept distance between the components as relevance information based on the relevance between the components constituting the target content.

The presentation unit 313 presents the inter-concept distance between the components extracted by the inter-concept distance extraction unit 312.

### (Operation of Presentation Device)

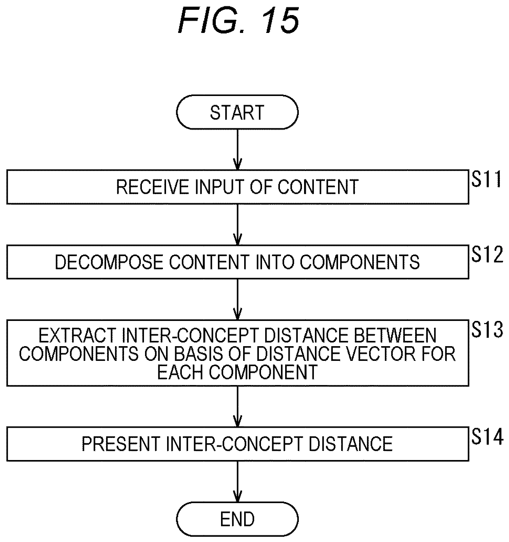

The operation of the presentation device 310 will be described with reference to the flowchart in Fig. 15.

In step S11, the component extraction unit 311 receives an input of content produced by the user.

In step S12, the component extraction unit 311 decomposes the input content into components.

In step S13, the inter-concept distance extraction unit 312 extracts the inter-concept distance between the components on the basis of the distance vector for each component.

In step S14, the presentation unit 313 presents the inter-concept distance. At this time, the inter-concept distance between the components can be spatially expressed, for example, as the degree distribution (hereinafter, referred to as a network distribution) of each node constituting a network.

### (Multiplicity of Same Inter-Concept Distance)

Note that, regarding the inter-concept distance between the components, it is also conceivable that a plurality of components is present at the same inter-concept distance.

For example, there may be a plurality of components at the inter-concept distance satisfying a certain distance in the space. It can be said that these components have different distance vectors even in a case where the inter-concept distances are the same.

### (Presentation of Plurality of Components)

In a case where a plurality of components at the inter-concept distance to be presented is present, the presentation unit 313 may present the plurality of components.

Specifically, the plurality of components at the inter-concept distance to be presented may be presented simultaneously, or may be presented one by one according to the interaction with the user, for example. Furthermore, the plurality of components may be presented in a priority order according to another index (for example, closeness of the distance to other components or the appropriateness of the inter-concept distance).

### (Comparison with Predetermined Criterion)

The presentation unit 313 may also present a relative relationship between a predetermined criterion and the inter-concept distance between the components.

For example, whether or not the inter-concept distance between certain nodes is longer (farther) than a distance as the predetermined criterion may be presented in comparison with a display indicating the criterion. Furthermore, whether or not the network distribution or its variance is wider (farther) than a range as the predetermined criterion may also be presented in comparison with a display indicating the criterion.

Here, the predetermined criterion may be a value (for example, an average value, a median value, or the like) based on the inter-concept distance of another piece of content of a genre (for example, a novel, a film, music, and the like, or a particular sub-genre thereof) to which the target content belongs. Furthermore, the predetermined criterion may be a value (distance or range) designated by a user who has produced the content, a client as a delivery destination of the content, or the like, or may be a value based on a target at which the target content is presented.

In this way, by presenting the relative relationship between the predetermined criterion and the inter-concept distances between components, the user can visually determine whether or not a certain inter-concept distance is maintained throughout the content.

Note that the network distribution or its variance, and the relative relationship with the predetermined criterion may also be presented quantitatively as specific scores.

### (Highlight Display of Inter-Concept Distance)

Furthermore, the presentation unit 313 may present specific components in an emphasized manner according to the relative relationship between the predetermined criterion and the inter-concept distance between the components.

For example, components of which inter-node distance is equal to or greater (farther) than a certain value with respect to the predetermined criterion or components of which the inter-node distance is equal to or smaller (closer) than a certain value with respect to the predetermined criterion may be highlighted. Furthermore, the highlighted components may be a Graphical User Interface (GUI), and a candidate for another component instead of the component may be presented on the basis of an operation instruction by the user. In this case, only one candidate for another component may be presented, or a plurality of candidates may be presented as described above.

As described above, a specific component is presented in an emphasized manner according to the relative relationship between the predetermined criterion and the inter-concept distance between the components, and thus the user can visually specify the characteristic component or the component that needs to be improved.

### (Evaluation of Content)

The presentation unit 313 may present an evaluation result representing whether or not the target content satisfies an evaluation criterion on the basis of the relative relationship between the predetermined criterion and the inter-concept distance between the components. The evaluation result can be presented as, for example, two-dimensional or three-dimensional graph information.

In this case, for example, in a case where the target content does not satisfy the evaluation criterion or the like, a candidate for another component instead of one component constituting the target content may be presented according to the evaluation result. At this time, whether or not the evaluation result can be improved may be further presented by modifying any of the components.

Furthermore, for the input of a plurality of pieces of content, the content may be presented such that the breadth of the network distribution of each content and the distance between the components can be compared between the pieces of content. In this case, the above-described predetermined criterion may be presented together.

As described above, a creator can objectively evaluate the quality of the content produced by himself/herself. Furthermore, the creator can check, at the production stage, to what extent the requirements of the client who placed the order have been met, and make modifications before delivery.

Moreover, the ordering party who placed the order to the creator can objectively evaluate the quality of a final product or can objectively compare and evaluate a plurality of final products. Furthermore, the ordering party can give modification instructions to the creator in an objective and concrete manner.

### (Estimation of Evaluation for Intended Target)

The evaluation result of such content may be presented as a comparative evaluation result with respect to the recipient (target) of the content. For example, the comparative evaluation result may be presented in terms of whether or not the network distribution of the content satisfies the predetermined criterion for the intended target.

Furthermore, in a case where there is a plurality of intended targets, which target the tendency of the network distribution of the target content as the evaluation target is more compatible with.

As described above, a producer can produce the content in consideration of the reaction of the intended recipient. Furthermore, the producer can estimate the effectiveness of the planning in advance at the planning stage, and evaluate an appropriate target for the content.

### <5. Configuration and Operation of Evaluation Device>

A configuration and an operation of an evaluation device that realizes evaluation of the inter-concept distance based on the inter-concept distance network 200 will be described.

### (Configuration of Evaluation Device)

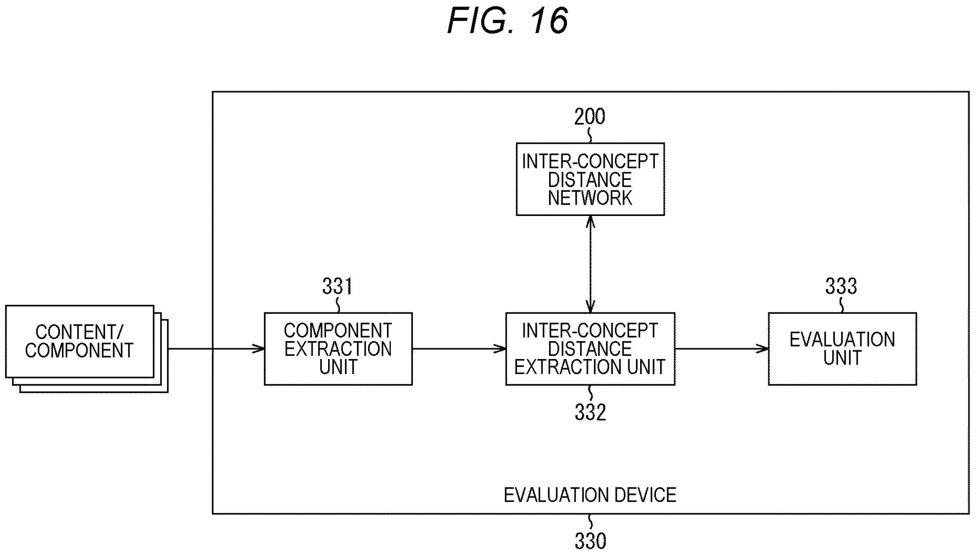

Fig. 16 is a block diagram illustrating a functional configuration example of the evaluation device.

An evaluation device 330 illustrated in Fig. 16 evaluates an inter-concept distance between components constituting the target content as the evaluation target or between components constituting a combination of a plurality of components on the basis of the inter-concept distance network 200.

The evaluation device 330 includes a component extraction unit 331, an inter-concept distance extraction unit 332, and an evaluation unit 333.

The component extraction unit 331 receives an input of the target content or a combination of a plurality of components, and decomposes the target content or the combination into components to extract the components constituting the target content or the combination.

On the basis of the index value (distance vector) for each component learned through the inter-concept distance network 200, the inter-concept distance extraction unit 332 extracts the inter-concept distance between the components as relevance information based on the relevance between the components.

The evaluation unit 333 evaluates the inter-concept distance between the components extracted by the inter-concept distance extraction unit 332.

### (Operation of Evaluation Device)

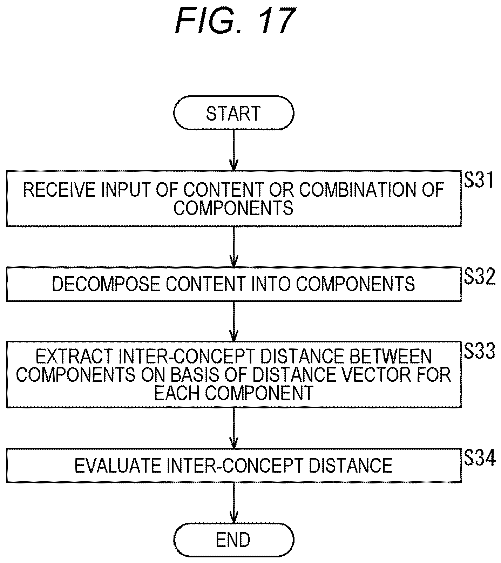

The operation of the evaluation device 330 will be described with reference to the flowchart in Fig. 17.

In step S31, the component extraction unit 331 receives an input of content produced by the user or a combination of components.

In step S32, the component extraction unit 331 decomposes the input content or combination into components.

In step S33, the inter-concept distance extraction unit 332 extracts the inter-concept distance between the components on the basis of the distance vector for each component.

In step S34, the evaluation unit 333 evaluates the inter-concept distance (appropriateness thereof).

### (Evaluation of Appropriateness of Component)

The evaluation unit 333 can present whether or not the inter-concept distance satisfies appropriateness, as the evaluation result of the inter-concept distance. For example, whether or not the inter-concept distance is an appropriate distance (not too far or not too close) may be presented. At this time, a criterion (for example, the predetermined criterion as described above) as a comparison target may be indicated by the user.

Therefore, the user can, during the production stage or preparation stage, reselect appropriate components, materials, or research subjects, and ultimately, broaden their creative ideas.

### (Modification Proposal of Content)

In a case where there is a component of which the inter-concept distance does not satisfy the appropriateness, the evaluation unit 333 may present proposal information for satisfying the appropriateness. For example, on the basis of a comparison result with the criterion as the comparison target, an alternative component may be presented in order to bring the inappropriate component up to an appropriate level. A plurality of alternative components may be presented, and the component may be selected by the user from the plurality of alternative components. At this time, the plurality of alternative components may be presented simultaneously, or may be presented one by one according to the interaction with the user, for example. Furthermore, the plurality of alternative components may be presented in a priority order according to another index (for example, closeness of the distance to other components or the appropriateness of the inter-concept distance). Furthermore, the alternative component may be a specific expression or an abstract guideline such as a genre or a property of the component.

### (Interactive Creation Support)

The user can produce and modify content interactively with an Artificial Intelligence (AI) system configured as the evaluation device 330 described above.

For example, the user or the AI system presents each modification proposal for the display of the network distribution or the combination of specific components, and repeats this process to enable interactive and real-time production to proceed. At this time, the interaction may be non-verbal interaction that directly presents a diagram or a video in addition to text or voice.

Furthermore, in the above-described process, the AI system may present another component at a corresponding appropriate distance with respect to the component presented by the user. In this case, only one of other components may be presented, or a plurality of other components may be presented as described above.

As described above, the user can proceed with production effectively in cooperation with the AI system by not only simply receiving evaluations and modification proposals for the content but also interactively trying out combinations of the components.

### (AI-Participatory Creation Support)

The AI system may act as a user in collaborative content production involving a plurality of users, and may perform production in cooperation with other users through interaction.

In this case, the AI system can also make the following proposal for the component proposal by the user.
•Indication that the inter-concept distance between the components is appropriate or inappropriate
•Presentation of other corresponding components located at an appropriate inter-concept distance from the corresponding component
•Presentation of alternative proposals of the combination of components to achieve a more appropriate inter-concept distance
•Proposal to change the criterion to be intended, or proposal of candidate criterion plans to be intended

In this way, the AI system participates in collaborative production to proceed with the production more smoothly. Such AI-participatory creation support is not limited to collaborative content production, and can also be applied to scenes such as planning meetings and brainstorming. Note that, also here, only one of other components, alternative proposals, candidate criterion plans, and the like may be presented, or a plurality of other components, alternative proposals, candidate criterion plans, and the like may be presented as described above.

### <6. Configuration and Operation of Generation Device>

A configuration and an operation of a generation device that realizes generation of the content based on the inter-concept distance network 200 will be described.

### (Configuration of Generation Device)

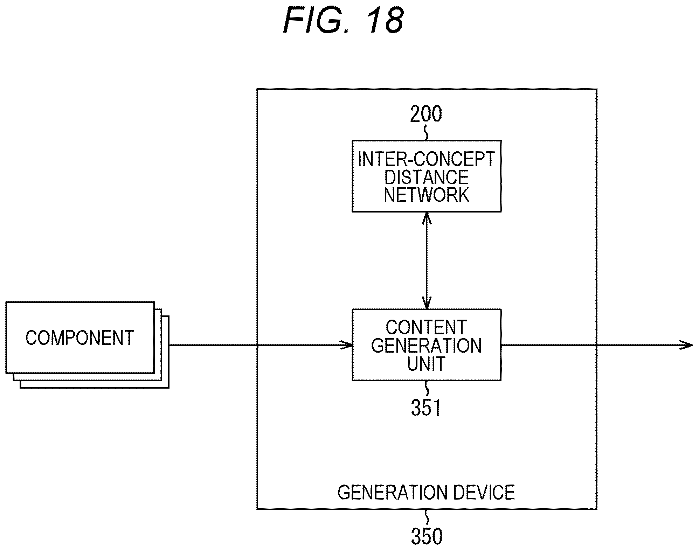

Fig. 18 is a block diagram illustrating a functional configuration example of the generation device.

A generation device 350 illustrated in Fig. 18 generates new content or a part thereof on the basis of the inter-concept distance network 200.

The generation device 350 includes a content generation unit 351.

The content generation unit 351 receives an input of one or a plurality of components for generating new content or a part thereof, and generates new content or a part thereof on the basis of the index value (distance vector) for each component learned through the inter-concept distance network 200.

### (Operation of Generation Device)

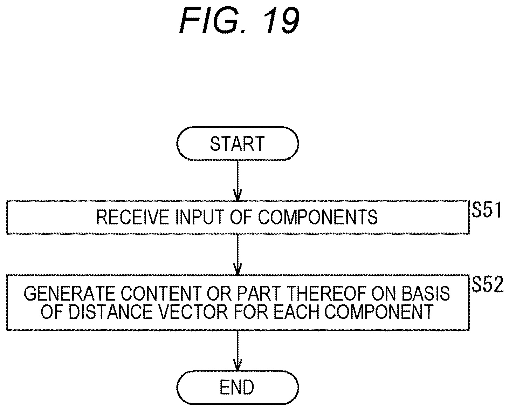

The operation of the generation device 350 will be described with reference to the flowchart in Fig. 19.

In step S51, the content generation unit 351 receives an input of components prepared by the user.

In step S52, the content generation unit 351 generates content or a part thereof on the basis of the distance vector for each component.

### (Generation and Proposal of Component/Module)

The AI system configured as the generation device 350 described above can generate a combination of components or a part of content (hereinafter, referred to as a module) as the combination thereof on the basis of an instruction from the user. In this case, the user may present (input) a general direction of one or a plurality of components serving as starting points, genre information, recipient information, and the like to the AI system in advance.

Furthermore, the AI system may generate a module without being based on the instruction from the user. In this case, the AI system can generate the module by repeating the modifications of the artifact by unsupervised learning using the interaction with the user as a reward.

Therefore, the user can proceed with content production starting from the module generated by the AI system, rather than from his/her own product.

### (Pre-production Generation)

The AI system can generate the artifact in accordance with a final artifact intended by the user, on the basis of the instruction from the user. In this case, the user may present a general direction of one or a plurality of components serving as starting points, genre information, recipient information, and the like, and production information (for example, a planning document, a plot, a script, and the like) at a previous stage of generation by the AI system. Furthermore, the AI system may modify the artifact by unsupervised learning using the interaction with the user as a reward.

Therefore, the user can cause the AI system to produce an output close to the final artifact, and use the output as a form of pre-production. Specifically, on the basis of the obtained artifact, it is possible to order a specific image to a creator who performs final production, or to share the image of a final work product with a production team. Furthermore, by using the pre-production, it is possible to self-check the production intention and perform effectiveness measurement by showing the pre-production to the intended target.

Furthermore, instead of the pre-production, the artifact may be used as a final work product. In this case, feedback to the pre-production may be taken into consideration in generating the final work product.

### (Optimization by Additional Learning)

In a case where one component is selected by the user from among the plurality of presented components as described above, the AI system may perform additional learning (retraining) of the user's selection result.

For example, in a case where the component is selected on the basis of the interaction with the user, the retraining of the selection result corresponds to the learning of the user's preferences. In this way, in response to the use of the AI system by the user, the AI system becomes optimized for the user.

Furthermore, for example, in a case where modifications to the component (re-selection of component) occur according to the evaluation of the work product, such as in exchanges between the contractor and the ordering party, the retraining of the selection result corresponds to the learning of the preferences shared between the contractor and the ordering party.

### <7. Use Case>

Hereinafter, use cases of the technique according to the present disclosure will be described.

### (Creation Support for Creator)

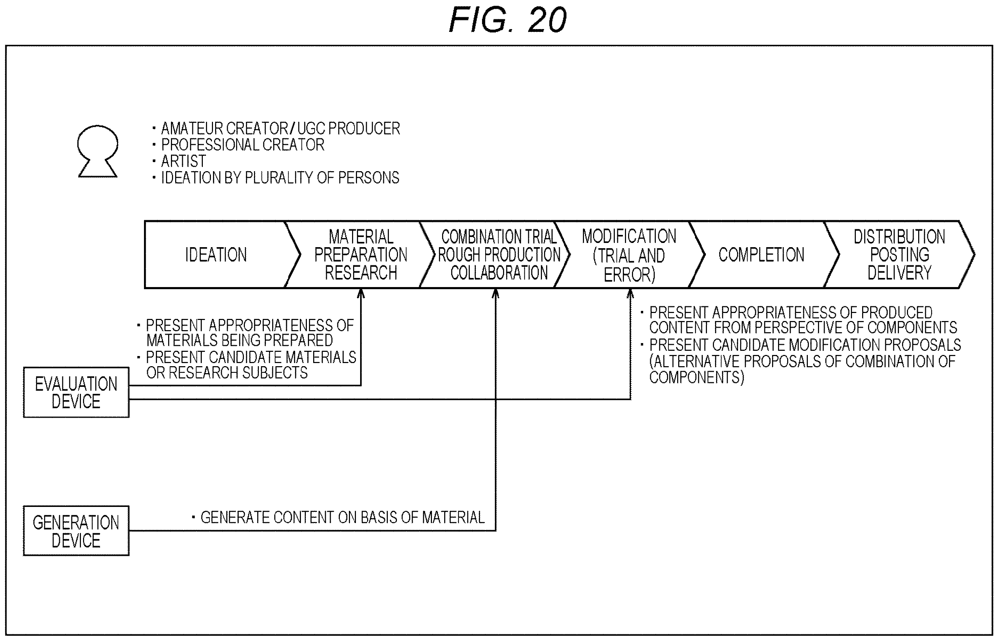

Fig. 20 is a diagram illustrating creation support for the creator, which is a first use case of the technique according to the present disclosure.

In the example of Fig. 20, the user who produces content may be an amateur creator, a User Generated Content (UGC) producer, a professional creator, an artist, ideation by a plurality of persons, or the like.

As illustrated in Fig. 20, creation by the creator is realized through each process of "ideation", "material preparation/research", "combination trial/rough production/collaboration", "modification (trial and error)", "completion", and "distribution/posting/delivery".

Among them, during "material preparation/research", the evaluation device of the present disclosure can present the appropriateness of the materials (components) being prepared, or present candidate materials or research subjects. Therefore, the user can broaden the idea at the preparation stage.

Furthermore, during "combination trial/rough production/collaboration", the generation device of the present disclosure can generate content on the basis of the materials. Therefore, the user can use the artifacts generated by the system as samples to serve as a basis of creation, or to combine these intermediate artifacts.

Moreover, during "modification (trial and error)", the evaluation device of the present disclosure can present the appropriateness of the produced content from the perspective of its components, and present candidate modification proposals (alternative proposals of the combination of the components). Therefore, the user can finish the content, which becomes the final artifact, in a better direction with the advice from such a system.

### (Production Stage Evaluation of Planning and Creative)

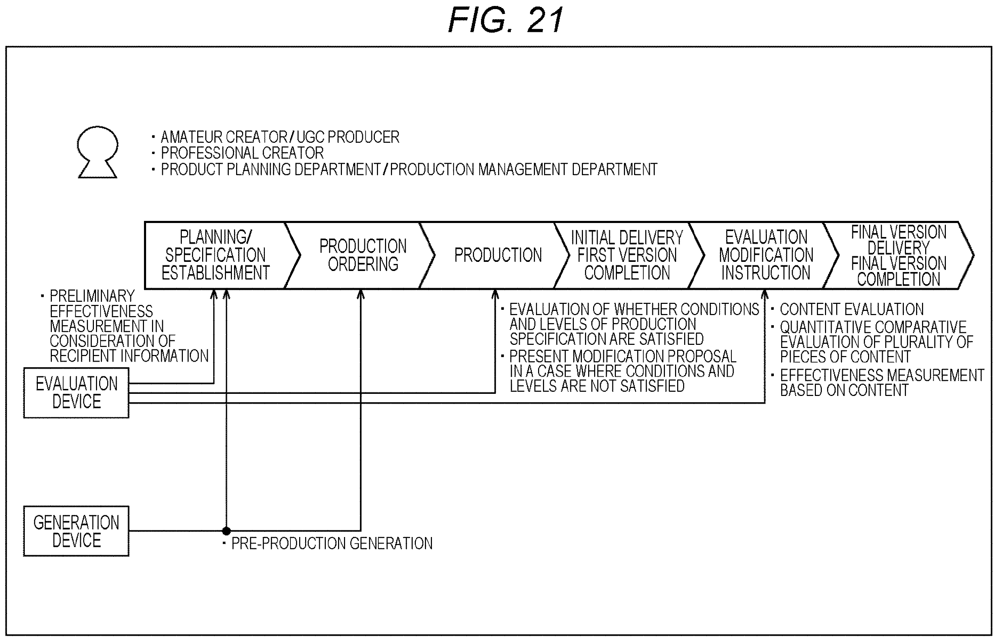

Fig. 21 is a diagram illustrating evaluation of a production stage of the planning and creative (product), which is a second use case of the technique according to the present disclosure.

In the example of Fig. 21, a user who produces the planning or creative is an amateur creator, a UGC producer, a professional creator, a product planning department, a production management department, or the like.

As illustrated in Fig. 21, the production of the planning and creative is realized through each process of "planning/specification determination", "production ordering", "production", "initial delivery/first version completion", "evaluation/modification instruction", and "final version delivery/final version completion".

Among them, during "planning/specification determination", the generation device of the present disclosure can generate pre-production. Therefore, a production commissioner checks a rough version during the planning stage and conducts a self-check of the planning intent. Similarly, during "planning/specification determination", the evaluation device of the present disclosure can perform preliminary effectiveness measurement in consideration of the recipient information. Therefore, a production ordering party can make rough estimation of the commercial effectiveness of the planning or the creative at the planning stage.

Furthermore, during "production ordering", the generation device of the present disclosure can also generate pre-production. Therefore, the production commissioner can more accurately place an order by presenting a rough image to the creator.

Moreover, during "production", the evaluation device of the present disclosure can evaluate whether or not the conditions and levels of the production specification are satisfied or present a modification proposal in a case where the conditions and levels are not satisfied. Therefore, the creator can conduct a self-check whether or not the production is being carried out at a level meeting the planning and specification, before delivery.

Furthermore, during "evaluation/modification instruction", the evaluation device of the present disclosure can perform evaluation of content, quantitative comparative evaluation of a plurality of pieces of content, and effectiveness measurement based on the content. Therefore, the production ordering party can evaluate the quality of the delivered artifact and to quantitatively compare a plurality of artifacts.

### (Production Stage Evaluation of Planning and Creative)

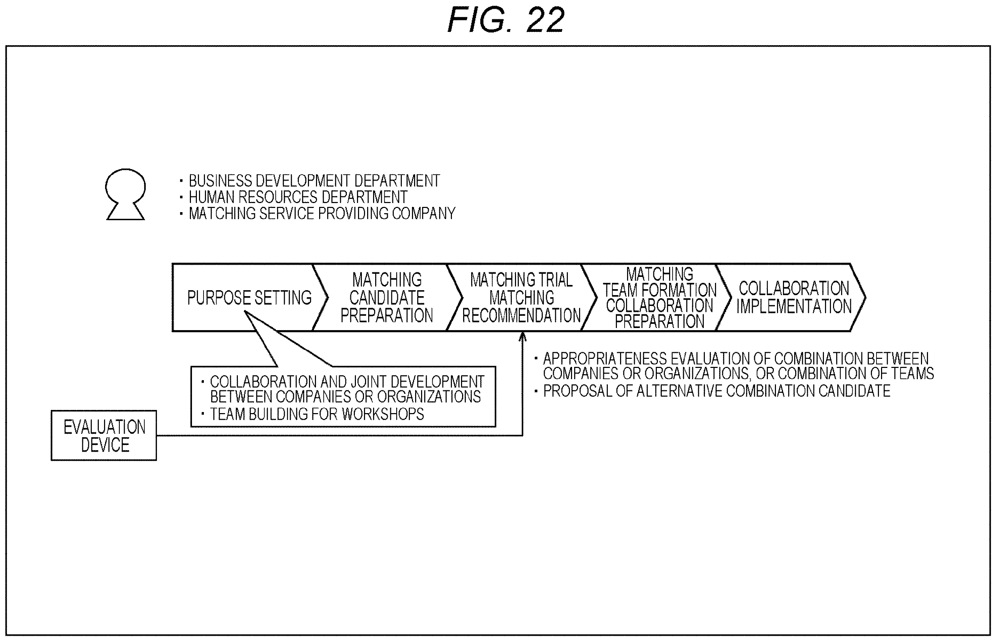

Fig. 22 is a diagram illustrating evaluation of a production stage of the planning and creative (product), which is a third use case of the technique according to the present disclosure.

In the example of Fig. 22, a user who produces the planning or creative is a business development department, a human resources department, a matching service providing company, or the like.

As illustrated in Fig. 22, the production of the planning and creative is realized through each process of "purpose setting", "matching candidate preparation", "matching trial/matching recommendation", "matching/team formation/collaboration preparation", and "collaboration implementation". Here, the purpose set during "purpose setting" is collaboration and joint development between companies or organizations, or team building for workshops.

Among them, during "matching trial/matching recommendation", the evaluation device of the present disclosure can evaluate the appropriateness of the combination between companies or organizations, or the combination of teams, and can also propose alternative combination candidates. Therefore, the user can finish the combination between companies or organizations, in a better direction with the advice from such a system.

### <8. Configuration Example of Hardware of Computer>

The above-described series of processing can be executed by hardware or software. In a case where the series of processing is executed by software, a program included in the software is installed from a program recording medium to a computer incorporated in dedicated hardware, a general-purpose personal computer and the like.

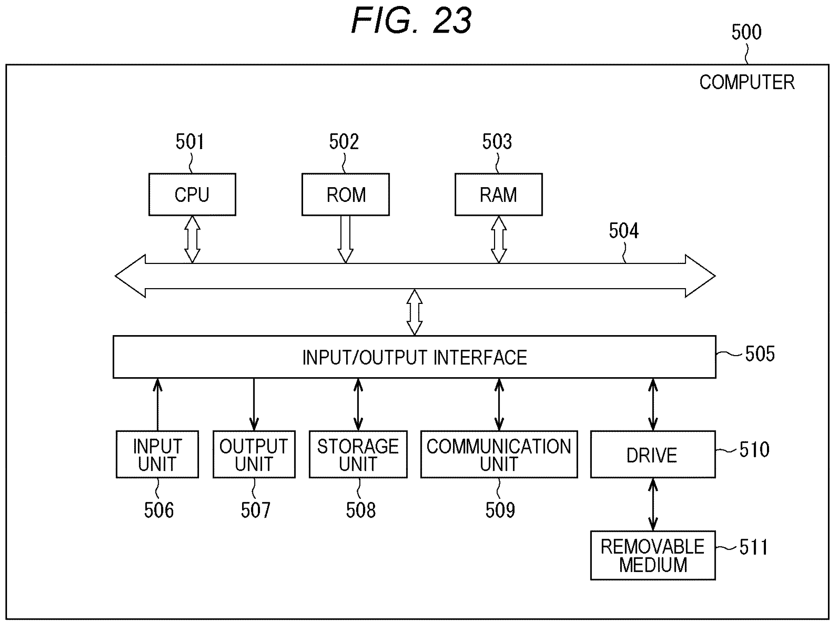

Fig. 23 is a block diagram illustrating a configuration example of hardware of a computer that executes the above-described series of processing by a program. The device for generating the inter-concept distance network, the presentation device 310, the evaluation device 330, and the generation device 350 include, for example, a PC having a configuration similar to the configuration illustrated in Fig. 23.

A central processing unit (CPU) 501, a read only memory (ROM) 502, and a random access memory (RAM) 503 are connected to each other by a bus 504.

An input/output interface 505 is further connected to the bus 504. An input unit 506 including a keyboard, a mouse, and the like, and an output unit 507 including a display, a speaker, and the like are connected to the input/output interface 505. Furthermore, a storage unit 508 including a hard disk, a non-volatile memory, or the like, a communication unit 509 including a network interface or the like, and a drive 510 that drives a removable medium 511 are connected to the input/output interface 505.

In the computer configured as described above, for example, the CPU 501 loads a program stored in the storage unit 508 into the RAM 503 via the input/output interface 505 and the bus 504 and executes the program, whereby the series of processing described above is performed.

For example, the program executed by the CPU 501 is recorded in the removable medium 511, or provided via a wired or wireless transmission medium such as a local area network, the Internet, or digital broadcasting, and then installed in the storage unit 508.

The program executed by the computer may be a program in which the processing is performed in time series in the order described in the present specification, or may be a program in which the processing is performed in parallel or at a necessary timing such as when a call is made and the like.

Note that, in the present specification, a system means an assembly of a plurality of components (devices, modules (parts), and the like), and it does not matter whether or not all the components are located in the same housing. Therefore, a plurality of devices housed in separate housings and connected via a network and one device in which a plurality of modules is housed in one housing are both systems.

The effects described in the present description are merely examples and are not limited, and other effects may also be provided.

The embodiment of the present disclosure is not limited to the embodiment described above, and various modifications can be made without departing from the gist of the present disclosure.

For example, the embodiment of the present disclosure can have a configuration of cloud computing in which one function is shared by a plurality of devices via a network and processing is performed in cooperation.

Furthermore, each step described in the flowchart described above can be performed by one device or can be shared and performed by a plurality of devices.

Moreover, in a case where a plurality of kinds of processing is included in one step, the plurality of kinds of processing included in the one step can be executed by one device or can be shared and executed by a plurality of devices.

The effects described in the present specification are merely examples and are not limited, and other effects may be provided.

Moreover, the technique according to the present disclosure can have the following configurations.
(1) A learning model generation method including:
   acquiring a plurality of components constituting each of a plurality of different pieces of content; and
   generating a learning model that outputs an index value indicating relevance of a first component with respect to a second component among the plurality of components.
(2) The learning model generation method according to (1),
   in which the plurality of components includes two or more content components that constitute the content and have different dimensions.
(3) The learning model generation method according to (2),
   in which the content component is two or more pieces of information constituting any of temporal change-related information, person-related information, style information, body motion pattern information, and target-related information.
(4) The learning model generation method according to (2),
   in which the content component includes at least any of temporal change-related information, person-related information, style information, body motion pattern information, or target-related information.
(5) The learning model generation method according to any one of (2) to (4),
   in which the plurality of components further includes a word or a sentence as the two or more content components having the same dimension.
(6) The learning model generation method according to any one of (1) to (5),
   in which the index value is a value weighted according to the content including the first component and the second component.
(7) The learning model generation method according to (6),
   in which the index value is a value further weighted according to evaluation information for the content.
(8) A presentation method performed by
   a presentation device including a learning model that has learned an index value indicating relevance of, among a plurality of components constituting each of a plurality of different pieces of content, a first component with respect to a second component, the presentation method including:
   inputting target content as an evaluation target; and
   presenting relevance information based on relevance between the components on the basis of the index value of each of the plurality of components constituting the target content.
(9) The presentation method according to (8),
   in which the relevance information is an inter-concept distance between the components.
(10) The presentation method according to (9), further including:
   spatially presenting the inter-concept distance between the components.
(11) The presentation method according to (10), further including:
   presenting a relative relationship between a predetermined criterion and the inter-concept distance between the components.
(12) The presentation method according to (11),
   in which the predetermined criterion is at least any of a value based on the inter-concept distance of another piece of content of a genre to which the target content belongs, a value designated by a user, or a value based on a target presented by the target content.
(13) The presentation method according to (11) or (12), further including:
   presenting a specific component in an emphasized manner according to the relative relationship.
(14) The presentation method according to (13), further including:
   presenting a candidate for another component instead of the specific component.
(15) The presentation method according to (11), further including:
   presenting an evaluation result representing whether or not the target content satisfies an evaluation criterion on the basis of the relative relationship.
(16) The presentation method according to (15), further including:
   presenting a candidate for another component instead of one component constituting the target content, according to the evaluation result.
(17) An evaluation method performed by
   an evaluation device including a learning model that has learned an index value indicating relevance of, among a plurality of components constituting each of a plurality of different pieces of content, a first component with respect to a second component, the evaluation method including:
   inputting target content as an evaluation target or a combination of the plurality of components; and
   evaluating relevance information based on relevance between the components on the basis of the index value of each of the plurality of components constituting the target content or the combination.
(18) The evaluation method according to (17), further including:
   presenting whether or not the relevance information satisfies appropriateness, as an evaluation result of the relevance information.
(19) The evaluation method according to (18), further including:
   presenting proposal information for satisfying the appropriateness in a case where the component of which the relevance information does not satisfy the appropriateness is present.
(20) A generation method performed by
   a generation device including a learning model that has learned an index value indicating relevance of, among a plurality of components constituting each of a plurality of different pieces of content, a first component with respect to a second component, the generation method including:
   inputting the plurality of components for generating new content or a part of the new content; and
   generating the new content or the part of the new content on the basis of the index value of each of the plurality of input components.

### REFERENCE SIGNS LIST

- 100: Component extraction model
- 200: Inter-concept distance network
- 310: Presentation device
- 311: Component extraction unit
- 312: Inter-concept distance extraction unit
- 313: Presentation unit
- 330: Evaluation device
- 331: Component extraction unit
- 332: Inter-concept distance extraction unit
- 333: Evaluation unit
- 350: Generation device
- 351: Content generation unit

## Claims

1. A learning model generation method comprising:
acquiring a plurality of components constituting each of a plurality of different pieces of content; and
generating a learning model that outputs an index value indicating relevance of a first component with respect to a second component among the plurality of components.

2. The learning model generation method according to claim 1,
wherein the plurality of components includes two or more content components that constitute the content and have different dimensions from each other.

3. The learning model generation method according to claim 2,
wherein the content component is two or more pieces of information constituting any of temporal change-related information, person-related information, style information, body motion pattern information, and target-related information.

4. The learning model generation method according to claim 2,
wherein the content component includes at least any of temporal change-related information, person-related information, style information, body motion pattern information, or target-related information.

5. The learning model generation method according to claim 2,
wherein the plurality of components further includes a word or a sentence as the two or more content components having the same dimension.

6. The learning model generation method according to claim 1,
wherein the index value is a value weighted according to the content including the first component and the second component.

7. The learning model generation method according to claim 6,
wherein the index value is a value further weighted according to evaluation information for the content.

8. A presentation method performed by
a presentation device including a learning model that has learned an index value indicating relevance of, among a plurality of components constituting each of a plurality of different pieces of content, a first component with respect to a second component, the presentation method comprising:
inputting target content as an evaluation target; and
presenting relevance information based on relevance between the components on a basis of the index value of each of the plurality of components constituting the target content.

9. The presentation method according to claim 8,
wherein the relevance information is an inter-concept distance between the components.

10. The presentation method according to claim 9, further comprising:
spatially presenting the inter-concept distance between the components.

11. The presentation method according to claim 10, further comprising:
presenting a relative relationship between a predetermined criterion and the inter-concept distance between the components.

12. The presentation method according to claim 11,
wherein the predetermined criterion is at least any of a value based on the inter-concept distance of another piece of content of a genre to which the target content belongs, a value designated by a user, or a value based on a target presented by the target content.

13. The presentation method according to claim 11, further comprising:
presenting the specific component in an emphasized manner according to the relative relationship.

14. The presentation method according to claim 13, further comprising:
presenting a candidate for another component instead of the specific component.

15. The presentation method according to claim 11, further comprising:
presenting an evaluation result representing whether or not the target content satisfies an evaluation criterion on a basis of the relative relationship.

16. The presentation method according to claim 15, further comprising:
presenting a candidate for another component instead of one component constituting the target content, according to the evaluation result.

17. An evaluation method performed by
an evaluation device including a learning model that has learned an index value indicating relevance of, among a plurality of components constituting each of a plurality of different pieces of content, a first component with respect to a second component, the evaluation method comprising:
inputting target content as an evaluation target or a combination of the plurality of components; and
evaluating relevance information based on relevance between the components on a basis of the index value of each of the plurality of components constituting the target content or the combination.

18. The evaluation method according to claim 17, further comprising:
presenting whether or not the relevance information satisfies appropriateness, as an evaluation result of the relevance information.

19. The evaluation method according to claim 18, further comprising:
presenting proposal information for satisfying the appropriateness in a case where the component whose relevance information does not satisfy the appropriateness is present.

20. A generation method performed by
a generation device including a learning model that has learned an index value indicating relevance of, among a plurality of components constituting each of a plurality of different pieces of content, a first component with respect to a second component, the generation method comprising:
inputting the plurality of components for generating new content or a part of the new content; and
generating the new content or the part of the new content on a basis of the index value of each of the plurality of input components.
